# EUROPEAN PATENT APPLICATION

(11) **EP 4 660 265 A1**
(43) Date of publication of application: **10.12.2025**
(21) Application number: 24750242.0
(22) Date of filing: 30.01.2024
(51) Int. Cl.: C09D 201/08, C09D 5/16, C09D 7/61, C09D 133/04

(54) **ANTIFOULING COATING COMPOSITION**

(30) Priority: 31.01.2023 JP 2023012923
(71) Applicant: Chugoku Marine Paints, Ltd., Hiroshima 739-0652 (JP)
(72) Inventor: TANINO, Soichiro, Otake-shi, Hiroshima 739-0652 (JP)
(74) Representative: Hoffmann Eitle
(86) International application number: PCT/JP2024/002737
(87) International publication number: WO 2024/162293

(57) **Abstract**

An object of the present invention is to provide a means which can sufficiently suppress the propagation of algae and the like even in a submerged place where algae and the like easily propagate due to factors such as a factor of being likely to be exposed to sunlight in a substrate having an antifouling coating film formed, and can be carried out at low cost. An antifouling coating composition for underwater application of the present invention contains a hydrolyzable polymer (A) containing a metal ester group and zinc oxide (B) having a specific surface area of 5 to 20 m²/g. A content of the zinc oxide (B) is, for example, 50 to 150 mass% with respect to 100 mass% of a solid content of the hydrolyzable polymer (A). The antifouling coating composition for underwater application may further contain an antifouling agent (C) and a monocarboxylic acid compound (E) and/or a metal ester thereof. An antifouling coating film formed from the antifouling coating composition for underwater application has a large coating film consumption degree in a bright place exposed to sunlight/a dark place not exposed to sunlight and has excellent static antifouling properties and dynamic antifouling properties even in the bright place.

## Description

### Technical Field

The present invention relates to an antifouling coating composition, an antifouling coating film, a substrate with an antifouling coating film, a method for producing a substrate with an antifouling coating film, and the like. More specifically, the present invention relates to an antifouling coating composition for underwater application containing a hydrolyzable polymer containing a metal ester group and a specific component such as zinc oxide, and the like.

### Background Art

As a method for preventing contamination of a substrate such as a ship by aquatic organisms or the like, a method of forming an antifouling coating film containing a hydrolyzable polymer on a substrate surface is widely used. As such an antifouling coating film, various antifouling coating agents containing a polymer containing a metal ester group have been studied.

For example, Patent Literature 1 describes an antifouling coating composition containing a polymer containing a metal ester group, zinc oxide, and medetomidine, in which a content of the zinc oxide in a solid content is 27 to 60 mass% (claims and the like). Patent Literature 1 describes that such an antifouling coating composition can provide an antifouling coating composition capable of forming an antifouling coating film which retains high antifouling properties for a prolonged period of time and has an excellent damage resistance (paragraphs 0006, 0007, and 0018). As a part of the reason why the invention described in the cited document 1 exerts the effect of solving the above problems, it is presumed that "it is considered that the antifouling coating film is imparted with appropriate water resistance and renewability from the surface thereof in water by containing the hydrolyzable polymer (A) containing a metal ester group, and furthermore with the particular amount of the zinc oxide (B) and the medetomidine (C) contained, an antifouling coating film that retains the antifouling properties for a further prolonged period of time and has an excellent damage resistance can be obtained through the mutual interaction in the antifouling coating film" (paragraph 0021), and it is also described that "the aforementioned effects are not a simple combination of the effects of each of the hydrolyzable polymer (A), the zinc oxide (B), and the medetomidine (C), but are derived from the synergistic effect obtained only by using them in combination" (paragraph 0057). Note that Patent Literature 1 does not particularly mention the specific surface area and other properties of zinc oxide to be used.

Meanwhile, an antifouling coating composition exhibiting antifouling performance by utilizing photocatalytic activity has also been proposed. For example, Patent Literature 2 describes an antifouling coating composition for underwater application, containing a metal oxide powder having photocatalytic activity and a binder (claims and the like), and describes that by blending a metal oxide powder having photocatalytic activity, a coating composition that has long-term antifouling properties, is excellent also in terms of safety, hygiene, and environmental conservation, and is less likely to form a skeleton structure is obtained, and in the invention, a photocatalytic powder that has largely absorbed sunlight near the surface of a formed coating film is decomposed by oxidizing or reducing a binder near the periphery thereof, and is dissolved or fallen in sea water, and a photocatalytic powder that is exposed to the surface of the coating film in such a manner has a sterilizing effect and the like, so that adhesion of water organisms is prevented (paragraphs 0005, 0006, and 0019). Patent Literature 2 exemplifies anatase-type titanium oxide (TiO₂), zinc oxide (ZnO), vanadium oxide (V₂O₅), tungsten oxide (WO₃), rubidium oxide (RuO₂), and the like as a metal oxide powder having photocatalytic activity, and describes that "anatase-type titanium oxide, which is particularly excellent in decomposing ability of organic compounds, is suitable", and that an average particle size of the photocatalytic powder of 0.001 to 0.8 µm, preferably 0.003 to 0.05 µm is suitable in order to increase a surface area and photocatalytic activity (paragraph 0007). Note that Patent Literature 2 exemplifies "sea water insoluble resin" (vinyl resin, polyester resin, or the like) and "hydrolyzable resin" as a "binder" (paragraph 0008), but only discloses one using "sea water insoluble resin" (acrylic resin not containing a metal ester group) in combination with "anatase titanium oxide" as an example (paragraph 0015).

### Citation List

### Patent Literatures

Patent Literature 1: WO 2018/003135 A1
Patent Literature 2: JP H10-204335 A

### Summary of Invention

### Technical Problem

On a substrate such as a ship on which an antifouling coating film is formed (to which an antifouling coating composition is applied), algae, and all marine organisms having the algae as a scaffold are likely to propagate in a place exposed to sunlight. A surface-abrased-type antifouling coating film formed from an antifouling coating composition containing a hydrolyzable polymer containing a metal ester group can improve antifouling performance such as algal resistance by designing a coating film consumption degree to be high (for example, by blending a material having high hydrophilicity). However, in many cases, it is not possible to determine in advance whether or not algae and the like are likely to propagate at a place to be coated due to factors such as a factor of being likely to be exposed to sunlight. In one substrate such as a ship, it is also difficult to finely apply different antifouling coating compositions for each part, such as applying an antifouling coating composition having a relatively high coating film consumption degree to a site where algae and the like easily propagate, and applying an antifouling coating composition having a relatively low coating film consumption degree to other parts.

An object of the present invention is to provide a means which can sufficiently suppress the propagation of algae and the like even in a submerged place where algae and the like easily propagate due to factors such as a factor of being likely to be exposed to sunlight, in a substrate having an antifouling coating film formed (coated with an antifouling coating composition) and can be carried out at low cost.

### Solution to Problem

The present inventors have found that an antifouling coating film formed from an antifouling coating composition containing zinc oxide having a specific surface area in a specific range together with a hydrolyzable polymer containing a metal ester group increases the consumption degree of the coating film in a place submerged under sunlight, and can enhance antifouling properties, so that the above problems can be solved.

That is, the present invention includes at least the following matters.
[1]
   An antifouling coating composition for underwater application, containing: a hydrolyzable polymer (A) containing a metal ester group; and zinc oxide (B) having a specific surface area of 5 to 20 m²/g.
[2] The antifouling coating composition for underwater application according to item 1, in which a content of the zinc oxide (B) is 50 to 150 mass% with respect to 100 mass% of a solid content of the hydrolyzable polymer (A).
[3] The antifouling coating composition for underwater application according to item 1 or 2, further containing an antifouling agent (C).
[4] The antifouling coating composition for underwater application according to any one of items 1 to 3, further containing a monocarboxylic acid compound (E) and/or a metal ester thereof.
[5] An antifouling coating film formed from the antifouling coating composition for underwater application according to any one of items 1 to 4.
[6] A substrate with an antifouling coating film, including: a substrate; and the antifouling coating film according to item 5.
[7] A method for producing a substrate with an antifouling coating film, the method including: a step (1) of coating or impregnating a substrate with the antifouling coating composition for underwater application according to any one of items 1 to 4 to obtain a coated body or an impregnated body; and a step (2) of drying the coated body or the impregnated body.
[8] The method for producing a substrate with an antifouling coating film according to item 7, in which the substrate is a ship bottom of a ship, and in the step (1), a large amount of the antifouling coating composition for underwater application having an identical composition is applied to a portion susceptible to sunlight, and a small amount of the antifouling coating composition for underwater application is applied to a portion not susceptible to sunlight to produce an incline in a film thickness of an antifouling coating film formed after the step (2).
[9] An antifouling coating film containing: a hydrolyzable polymer containing a metal ester group; and zinc oxide, in which a bright-and-dark abrased film thickness ratio as measured by the following method is 1.5 or more,

### (Bright-and-dark abrased film thickness ratio)

A ratio of a coating film consumption degree (initial film thickness - film thickness after 3 months) in a bright place to a coating film consumption degree in a dark place when a test plate having an antifouling coating film formed is fixed to a surface of a rotary drum, and the surface of the rotary drum is rotated at a speed of 10 kt for 3 months at each of a position (bright place) exposed to transmitted sunlight and a position (dark place) shielded from the sunlight in a water tank placed indoors and filled with sea water replaced at a constant speed.

[10] A substrate with an antifouling coating film, including: a substrate; and the antifouling coating film according to item 9.

### Advantageous Effects of Invention

Since the consumption degree of the coating film increases in a submerged place where algae and the like easily propagate due to factors such as a factor of being likely to be exposed to sunlight in a substrate, the antifouling coating film formed from the antifouling coating composition of the present invention can sufficiently suppress the propagation of algae and the like. On the other hand, in a place where sunlight is less likely to be applied and the coating film is not consumed, the residual coating film becomes thick, the coating amount can be reduced at the time of the next repainting, and there is an economic advantage. Such an effect is produced by applying a single antifouling coating composition to the entire surface of the submersion site of the substrate, and it is not necessary to change the design of the antifouling coating composition to be applied for each site of the substrate, for example, depending on whether sunlight is likely to be applied or not. It is considered that the antifouling properties (static antifouling properties, dynamic antifouling performance) according to the present invention are based on a synergistic effect produced by using zinc oxide having a specific surface area satisfying a predetermined condition in combination with a hydrolyzable polymer containing a metal ester group, and does not simply rely on the "photocatalytic activity" described in Patent Literature 2.

### Description of Embodiments

In the present specification, "(meth)acrylic acid" means "acrylic acid or methacrylic acid" or "acrylic acid and methacrylic acid" depending on the context, and "(meth)acrylate" means "acrylate or methacrylate" or "acrylate and methacrylate" depending on the context.

An upper limit value and a lower limit value described in the present specification (for example, regarding the content of the component) can be arbitrarily combined to set a numerical range.

In the present specification (particularly, Examples), "part(s)" as a unit added after a numerical value means "part(s) by mass" unless otherwise specified. A part (by mass) of a certain substance with respect to 100 parts (by mass) of a reference substance is synonymous with mass% of the certain substance with respect to 100 mass% of the reference substance.

### -Antifouling coating composition for underwater application-

An antifouling coating composition for underwater application of the present invention contains a hydrolyzable polymer (A) containing a metal ester group (also simply referred to as "hydrolyzable polymer (A)" or "component (A)" in the present specification) and zinc oxide (B) having a specific surface area of 5 to 20 m²/g (also simply referred to as "zinc oxide (B)" or "component (B) in the present specification).

### <Hydrolyzable polymer (A)>

The hydrolyzable polymer (A) contains a constituent unit derived from a metal ester group-containing monomer (a1) (also referred to as "monomer (a1)" in the present specification) and/or a constituent unit derived from a metal ester group-containing monomer (a2) (also referred to as "monomer (a2)" in the present specification). Any one kind of the hydrolyzable polymer (A) may be used, or two or more kinds of hydrolyzable polymer (A) having different structures, ratios, or the like in the constituent unit derived from the monomer (a1) and/or the constituent unit derived from the monomer (a2) may be used.

### -Metal ester group-containing monomer (a1)

The metal ester group-containing monomer (a1) is a monomer represented by the following Formula (1). The monomer (a1) may be any one kind or two or more kinds.

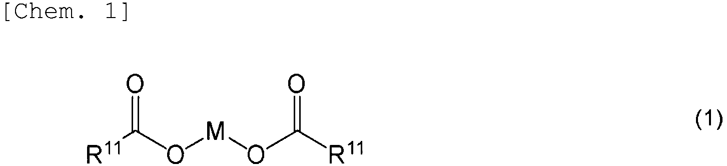

In Formula (1), each R¹¹ independently represents a monovalent group containing a terminal ethylenically unsaturated group (CH₂=C<), and M represents a copper atom or a zinc atom.

The number of carbon atoms of the terminal ethylenically unsaturated group of R¹¹ is preferably 2 to 50, more preferably 2 to 30, still more preferably 2 to 10, and particularly preferably 2 to 6.

R¹¹ may further contain an ethylenically unsaturated group in addition to the terminal, but more preferably contains an ethylenically unsaturated group only at the terminal.

R¹¹ is preferably an organic group containing a terminal ethylenically unsaturated group (referred to as "terminal ethylenically unsaturated organic group" in the present specification). Examples of the terminal ethylenically unsaturated organic group include unsaturated aliphatic hydrocarbon groups in which a part of the structure may be substituted with an ester bond, an amide bond, or an ether bond. Specific examples of such a terminal ethylenically unsaturated organic group include a group obtained by removing a carboxy group from an aliphatic unsaturated monocarboxylic acid containing a terminal ethylenically unsaturated group such as acrylic acid (also known as: 2-propenoic acid), methacrylic acid (also known as: 2-methyl-2-propenoic acid), 3-butenoic acid, 4-pentenoic acid, 10-undecenoic acid, or (meth)acryloyloxyalkylcarboxylic acid [e.g.: 3-(meth)acryloyloxypropionic acid, 3-(meth)acryloyloxy-2-methylpropionic acid]; and a group obtained by removing one carboxy group from an aliphatic unsaturated dicarboxylic acid having a terminal ethylenically unsaturated group such as itaconic acid. The terminal ethylenically unsaturated organic group is more preferably a group obtained by removing a carboxy group from an aliphatic unsaturated monocarboxylic acid containing a terminal ethylenically unsaturated group, still more preferably a group obtained by removing a carboxy group from acrylic acid, methacrylic acid, or (meth)acryloyloxyalkylcarboxylic acid, and particularly preferably a group obtained by removing a carboxy group from acrylic acid or methacrylic acid.

The monomer (a1) is preferably a monomer represented by the following Formula (1') (also referred to as "monomer (a1')" in the present specification). The monomer (a1') corresponds to a case where, in the monomer (1), both of the terminal ethylenically unsaturated organic groups of two R¹¹s are groups obtained by removing a carboxy group from acrylic acid or methacrylic acid.

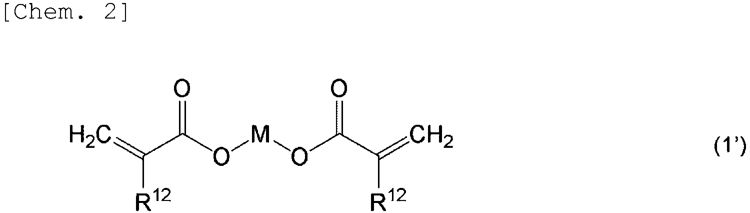

In Formula (1'), each R¹² independently represents a hydrogen atom or a methyl group, and M represents a copper atom or a zinc atom.

Examples of the monomer (a1) include zinc diacrylate, zinc dimethacrylate, zinc acrylate methacrylate, zinc di(3-acryloyloxypropionate), zinc di(3-methacryloyloxypropionate), zinc di(3-(meth)acryloyloxy-2-methylpropionate), copper diacrylate, copper dimethacrylate, copper acrylate methacrylate, copper di(3-acryloyloxypropionate), copper di(3-methacryloyloxypropionate), and copper di(3-(meth)acryloyloxy-2-methylpropionate), and among these, from the viewpoint that an antifouling coating film having sufficient antifouling properties can be easily obtained, zinc diacrylate, zinc dimethacrylate, or zinc acrylate methacrylate is preferable. Note that zinc diacrylate, zinc dimethacrylate, zinc acrylate methacrylate, copper diacrylate, copper dimethacrylate, and copper acrylate methacrylate correspond to the monomer (a1').

### -Metal ester group-containing monomer (a2)

The metal ester group-containing monomer (a2) is a monomer represented by the following Formula (2). The monomer (a2) may be any one kind or two or more kinds.

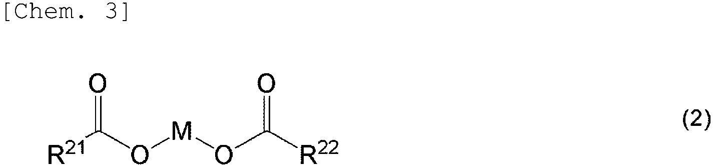

In Formula (2), R²¹ represents a monovalent group containing a terminal ethylenically unsaturated group (CH₂=C<), R²² represents a monovalent organic group having 1 to 30 carbon atoms and not containing a terminal ethylenically unsaturated group, and M represents a copper atom or a zinc atom.

For technical matters related to the terminal ethylenically unsaturated group of R²¹, in the present specification, the technical matters related to the terminal ethylenically unsaturated group of R¹¹ described in the relationship with Formula (1) can be referred to as it is.

Examples of R²² include organic groups not containing a terminal ethylenically unsaturated group, such as an aliphatic hydrocarbon group having 1 to 30 carbon atoms, an alicyclic hydrocarbon group having 3 to 30 carbon atoms, or an aromatic hydrocarbon group having 6 to 30 carbon atoms, (referred to as "non-terminal ethylenically unsaturated organic group" in the present specification). The non-terminal ethylenically unsaturated organic group may further contain a substituent (for example, a hydrogen group).

The aliphatic hydrocarbon group in the non-terminal ethylenically unsaturated organic group may be either linear or branched, and may be a saturated aliphatic hydrocarbon group or an unsaturated aliphatic hydrocarbon group (limited to those not containing a terminal ethylenically unsaturated group). The number of carbon atoms of the aliphatic hydrocarbon group is 1 to 30, preferably 1 to 28, more preferably 1 to 26, and still more preferably 1 to 24. The aliphatic hydrocarbon group may be substituted with an alicyclic hydrocarbon group or an aromatic hydrocarbon group.

The alicyclic hydrocarbon group in the non-terminal ethylenically unsaturated organic group may be a saturated alicyclic hydrocarbon group or an unsaturated alicyclic hydrocarbon group. The number of carbon atoms of the alicyclic hydrocarbon group is 3 to 30, preferably 4 to 20, more preferably 5 to 16, and still more preferably 6 to 12. The alicyclic hydrocarbon group may be substituted with an aliphatic hydrocarbon group or an aromatic hydrocarbon group.

The number of carbon atoms of the aromatic hydrocarbon group in the non-terminal ethylenically unsaturated organic group is 6 to 30, preferably 6 to 24, more preferably 6 to 18, and still more preferably 6 to 10. The aromatic hydrocarbon group may be substituted with an aliphatic hydrocarbon group or an alicyclic hydrocarbon group.

R²² is preferably an organic acid residue derived from a monobasic acid, specific examples thereof include groups obtained by removing a carboxy group from an organic acid such as versatic acid, palmitic acid, stearic acid, isostearic acid, oleic acid, linoleic acid, linolenic acid, abietic acid, neoabietic acid, pimaric acid, dehydroabietic acid, 12-hydroxystearic acid, or naphthenic acid, and among these, a group obtained by removing a carboxy group from abietic acid, versatic acid, or naphthenic acid is preferable, and a group obtained by removing a carboxy group from abietic acid or versatic acid is more preferable. Note that versatic acid is a generic term for a highly branched carboxylic acid mixture having 9 to 11 carbon atoms, mainly 10 carbon atoms.

The monomer (a2) is preferably a monomer represented by the following Formula (2') (also referred to as "monomer (a2')" in the present specification). The monomer (a2') corresponds to a case where, in the monomer (2), the terminal ethylenically unsaturated organic group of R²² is a group obtained by removing a carboxy group from acrylic acid or methacrylic acid.

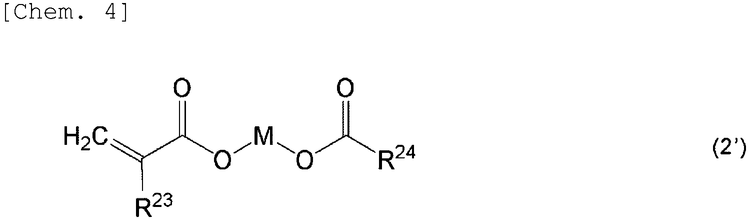

In Formula (2'), R²³ represents a hydrogen atom or a methyl group, R²⁴ has the same meaning as R²² in Formula (2), and M represents a copper atom or a zinc atom.

Examples of the monomer (a2) include zinc 3-(meth)acryloyloxypropionate rosinate, zinc 3-(meth)acryloyloxypropionate versatate, zinc (meth)acrylate rosinate, zinc (meth)acrylate versatate, zinc (meth)acrylate naphthenate, copper 3-(meth)acryloyloxypropionate rosinate, copper 3-(meth)acryloyloxypropionate versatate, copper (meth)acrylate rosinate, copper (meth)acrylate versatate, and copper (meth)acrylate naphthenate. Note that zinc (meth)acrylate rosinate, zinc (meth)acrylate versatate, zinc (meth)acrylate naphthenate, copper (meth)acrylate rosinate, copper (meth)acrylate versatate, and copper (meth)acrylate naphthenate correspond to the monomer (a2').

### -Monomer for copolymerization

The hydrolyzable polymer (A) may further contain a monomer other than the monomer (a1) and the monomer (a2), which can be copolymerized with the monomer (a1) and/or the monomer (a2), as necessary. Examples of such an optional monomer include a monomer not containing a metal ester group and having an ethylenically unsaturated group, for example, an organosiloxane block-containing monomer (a3) (also referred to as "monomer (a3)" in the present specification); a (meth)acrylate or an ester thereof (a4) (also referred to as "monomer (a4)" in the present specification); and a vinyl compound (a5) (also referred to as "monomer (a5)" in the present specification).

### -Monomer (a3)

The monomer (a3), that is, the organosiloxane block-containing monomer (a3) is a monomer represented by the following Formula (3). The monomer (a3) may be any one kind or two or more kinds.

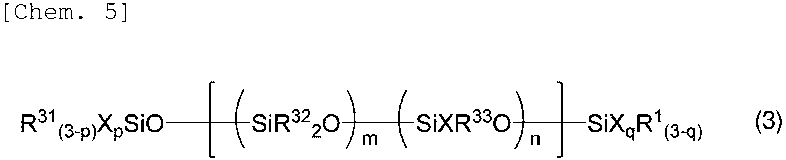

In Formula (3), R³¹, R³², and R³³ each independently represent a monovalent hydrocarbon group, each X independently represents a (meth)acryloyloxyalkyl group or a mercaptoalkyl group, m is 1 or more, n is 0 or more, p and q are each independently 0 or 1, and n + p + q is 1 or more.

Examples of the hydrocarbon group in R³¹, R³², and R³³ include a linear, branched, or cyclic alkyl group and an aryl group. The number of carbon atoms of the alkyl group is preferably 1 to 12, more preferably 1 to 8, and still more preferably 1 to 4. The number of carbon atoms of the aryl group is preferably 6 to 14 and more preferably 6 to 10. From the viewpoint of ease of polymerization, R³¹, R³², and R³³ are each independently preferably an alkyl group such as a methyl group or a butyl group.

Examples of X include (meth)acryloyloxyalkyl groups such as a (meth)acryloyloxyethyl group, a (meth)acryloyloxypropyl group, and a (meth)acryloyloxybutyl group; and mercaptoalkyl groups such as a mercaptomethyl group, a mercaptoethyl group, a mercaptopropyl group, and a mercaptobutyl group. X is preferably a (meth)acryloyloxyalkyl group from the viewpoint of progress of uniform polymerization, and is preferably a mercaptoalkyl group from the viewpoint of reducing the viscosity of the hydrolyzable polymer (A) and facilitating handling.

m and n mean an average number of moles added for (SiR³²₂O) and (SiXR³³O), respectively, and m + n is preferably 2 or more. That is, the organosiloxane block-containing monomer (a3) is preferably a polyorganosiloxane block-containing monomer.

Note that, in the present specification, as in Formula (3), the description of two or more different repeating units juxtaposed in [] means that the repeating units may be repeated in any order, namely in random, alternate, or blockwise order. That is, for example, in the case of the formula -[Y₃-Z₃]- (in which Y and Z each represent a repeating unit), the order intended by the description may be a random order such as -YYZYZZ-, an alternate order such as -YZYZYZ-, or a blockwise order such as -YYYZZZ- or -ZZZYYY-.

A first embodiment of the monomer (a3) includes a monomer (a31) in which n is 0, p is 1, and q is 0. It is preferable that the hydrolyzable polymer (A) contains a constituent unit derived from such a monomer (a31) because, for example, an antifouling coating composition easily forms an antifouling coating film excellent in antifouling properties. From the viewpoint of ease of polymerization and the like, m in the monomer (a31) is preferably 3 or more and more preferably 5 or more, and is preferably 200 or less and more preferably 70 or less.

As the monomer (a31), for example, "FM-0711" (one-terminal methacryloyloxyalkyl-modified organopolysiloxane, number average molecular weight: 1,000), "FM-0721" (one-terminal methacryloyloxyalkyl-modified organopolysiloxane, number average molecular weight: 5,000), and "FM-0725" (one-terminal methacryloyloxyalkyl-modified organopolysiloxane, number average molecular weight: 10,000) which are commercially available products manufactured by JNC Corporation; "X-22-174ASX" (one-terminal methacryloyloxyalkyl-modified organopolysiloxane, functional group equivalent: 900 g/mol), "KF-2012" (one-terminal methacryloyloxyalkyl-modified organopolysiloxane, functional group equivalent: 4,600 g/mol), and X-22-2426 (one-terminal methacryloyloxyalkyl-modified organopolysiloxane, functional group equivalent: 12,000 g/mol) which are commercially available products manufactured by Shin-Etsu Chemical Co., Ltd., and the like can be used.

A second embodiment of the monomer (a3) includes a monomer (a32) in which n is 0, and p and q are 1. It is preferable that the hydrolyzable polymer (A) contains a constituent unit derived from such a monomer (a32) because, for example, an antifouling coating composition easily forms an antifouling coating film excellent in repairing properties, that is, excellent in adhesion with respect to an old antifouling coating film after use (after immersion in sea water). From the viewpoint of ease of polymerization and the like, m in the monomer (a32) is preferably 3 or more and more preferably 5 or more, and is preferably 200 or less and more preferably 70 or less.

As the monomer (a32), for example, "FM-7711" (both-terminal methacryloyloxyalkyl-modified organopolysiloxane, number average molecular weight: 1,000), "FM-7721" (both-terminal methacryloyloxyalkyl-modified organopolysiloxane, number average molecular weight: 5,000), and "FM-7725" (both-terminal methacryloyloxyalkyl-modified organopolysiloxane, number average molecular weight: 10,000) which are commercially available products manufactured by JNC Corporation; "X-22-164" (both-terminal methacryloyloxyalkyl-modified organopolysiloxane, functional group equivalent: 190 g/mol), "X-22-164AS" (both-terminal methacryloyloxyalkyl-modified organopolysiloxane, functional group equivalent: 450 g/mol), "X-22-164A" (both-terminal methacryloyloxyalkyl-modified organopolysiloxane, functional group equivalent: 860 g/mol), "X-22-164B" (both-terminal methacryloyloxyalkyl-modified organopolysiloxane, functional group equivalent: 1630 g/mol), "X-22-164C" (both-terminal methacryloyloxyalkyl-modified organopolysiloxane, functional group equivalent: 2,370 g/mol), "X-22-164E" (both-terminal methacryloyloxyalkyl-modified organopolysiloxane, functional group equivalent: 3,900 g/mol), and "X-22-167B" (both-terminal mercaptoalkyl-modified organopolysiloxane, functional group equivalent: 1,670 g/mol) which are commercially available products manufactured by Shin-Etsu Chemical Co., Ltd., and the like can be used.

A third embodiment of the monomer (a3) includes a monomer (a33) in which n is 1 or more. It is preferable that the hydrolyzable polymer (A) contains a constituent unit derived from such a monomer (a33), because, for example, the viscosity of the antifouling coating composition tends to decrease and handling tends to be easy. m in the monomer (a33) is preferably 50 to 1,000, and n is preferably 1 to 30.

As the monomer (a33), for example, "KF-2001" (side-chain mercaptoalkyl-modified organopolysiloxane, functional group equivalent: 1,900 g/mol), and "KF-2004" (side-chain mercaptoalkyl-modified organopolysiloxane, functional group equivalent: 30,000 g/mol) which are commercially available products manufactured by Shin-Etsu Chemical Co., Ltd., and the like can be used.

### -Monomer (a4)

The monomer (a4), that is, the (meth)acrylate or the ester thereof (a4) is a compound represented by the following Formula (4). The monomer (a4) may be any one kind or two or more kinds.

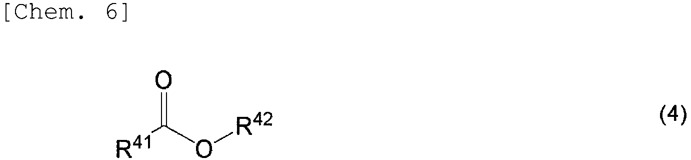

In Formula (4), R⁴¹ represents a monovalent group containing an ethylenically unsaturated group, and R⁴² represents a hydrogen atom, an alkyl group, an aryl group, an alkoxyalkyl group, a hydroxyalkyl group, or a glycidyl group.

A first embodiment of the monomer (a4) includes a monomer (a41) in which R⁴² is a hydrogen atom, for example, a (meth)acrylic acid. When the hydrolyzable polymer (A) contains such a monomer (a41), an antifouling coating composition to be obtained tends to have excellent adhesion with respect to an old antifouling coating film after use (after immersion in sea water), a low viscosity, and excellent coating workability, and the coating film consumption degree of an antifouling coating film to be formed tends to increase.

A second embodiment of the monomer (a4) includes a monomer (a42) in which R⁴² is an alkyl group or an aryl group. The alkyl group as R⁴² may have any of a linear, branched, and cyclic structure, and the number of carbon atoms is preferably 1 to 20, more preferably 1 to 12, and still more preferably 1 to 6. When the hydrolyzable polymer (A) contains such a monomer (a42), an antifouling coating film formed by an antifouling coating composition to be obtained tends to have a coating film consumption degree suppressed at an appropriate renewal rate without significantly impairing the antifouling properties, and tends to be excellent in damage resistance and/or crack resistance.

Specific examples of the monomer (a42) include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, phenyl (meth)acrylate, and benzyl (meth)acrylate. For example, at least one selected from the group consisting of methyl (meth)acrylate, ethyl (meth)acrylate, n-butyl (meth)acrylate, and cyclohexyl (meth)acrylate is preferably used as the monomer (a42).

A third embodiment of the monomer (a4) includes a monomer (a43) in which R⁴² is an alkoxyalkyl group. The alkoxyalkyl group as R⁴² may have any of a linear, branched, and cyclic structure, and the number of carbon atoms (the sum of the number of carbon atoms contained in the alkyl group in the alkoxy group and the number of carbon atoms contained in the alkyl group) is preferably 1 to 20, more preferably 1 to 12, and still more preferably 1 to 6. When the hydrolyzable polymer (A) contains such a monomer (a43), an antifouling coating film formed from an antifouling coating composition to be obtained tends to maintain an appropriate coating film consumption degree for a prolonged period of time.

Specific examples of the monomer (a43) include 2-methoxyethyl (meth)acrylate, 2-ethoxyethyl (meth)acrylate, 3-methoxybutyl (meth)acrylate, 4-methoxybutyl (meth)acrylate, 3-methoxy-n-propyl (meth)acrylate, 2-propoxyethyl (meth)acrylate, 2-butoxyethyl (meth)acrylate, isobutoxybutyldiglycol (meth)acrylate, 2-phenoxyethyl (meth)acrylate, methoxypolyethylene glycol (meth)acrylate, ethoxypolyethylene glycol (meth)acrylate, butoxypolyethylene glycol (meth)acrylate, and phenoxypolyethylene glycol (meth)acrylate. For example, 2-methoxyethyl (meth)acrylate is preferably used as the monomer (a43).

A fourth embodiment of the monomer (a4) includes a monomer (a44) in which R⁴² is a hydroxyalkyl group. The hydroxyalkyl group as R⁴² may have any of a linear, branched, and cyclic structure, and the number of carbon atoms is preferably 1 to 20, more preferably 1 to 12, and still more preferably 1 to 6. When the hydrolyzable polymer (A) contains such a monomer (a44), the coating film consumption degree of an antifouling coating film formed from an antifouling coating composition to be obtained tends to increase.

Specific examples of the monomer (a44) include hydroxymethyl (meth)acrylate, 2-hydroxyethyl (meth)acrylate, 2-hydroxypropyl (meth)acrylate, 4-hydroxybutyl (meth)acrylate, and 2-hydroxy-3-phenoxypropyl (meth)acrylate.

A fifth embodiment of the monomer (a4) includes a monomer (a45) in which R⁴² is a glycidyl group, for example, glycidyl (meth)acrylate. When the hydrolyzable polymer (A) contains such a monomer (a44), the coating film consumption degree of an antifouling coating film formed from an antifouling coating composition to be obtained tends to increase.

The hydrolyzable polymer (A) preferably contains the monomer (a42) and/or the monomer (a43) among the monomers (a4) from the viewpoint that the coating film consumption degree of an antifouling coating film formed from an antifouling coating composition to be obtained can be appropriately adjusted and the viewpoint that damage resistance and/or crack resistance also tend to be excellent.

### -Monomer (a5)

Examples of the monomer (a5), that is, the vinyl compound include styrene, α-methylstyrene, vinyl acetate, vinyl benzoate, vinyl toluene, acrylonitrile, vinyl pyridine, vinyl pyrrolidone, and vinyl chloride. The monomer (a5) may be any one kind or two or more kinds.

### -Ratio of Constituent Unit

The type and ratio of the constituent unit derived from each of the monomer (a1) and/or the monomer (a2) contained in the hydrolyzable polymer (A) and other monomers used as necessary can be appropriately adjusted in consideration of the effects of the present invention, other technical matters, and the like.

For example, the ratio of the constituent unit derived from the monomer (a1) and/or the constituent unit derived from the monomer (a2) is preferably 5 mass% or more, more preferably 7 mass% or more, and still more preferably 9 mass% or more, and is preferably 50 mass% or less, more preferably 40 mass% or less, and still more preferably 30 mass% or less, with respect to 100 mass% of all the constituent units in the hydrolyzable polymer (A).

The hydrolyzable polymer (A) preferably contains at least a constituent unit derived from the (meth)acrylate or an ester thereof (a4) in addition to the constituent unit derived from the monomer (a1) and/or the constituent unit derived from the monomer (a2), and may further contain a constituent unit derived from the organosiloxane block-containing monomer (a3).

When the hydrolyzable polymer (A) contains the constituent unit derived from the organosiloxane block-containing monomer (a3), the ratio thereof is preferably 5 mass% or more and more preferably 8 mass% or more, and is preferably 20 mass% or less and more preferably 15 mass% or less, with respect to 100 mass% of all the constituent units in the hydrolyzable polymer (A).

When the hydrolyzable polymer (A) contains the constituent unit derived from the (meth)acrylate or an ester thereof (a4), the ratio thereof is preferably 3 mass% or more and more preferably 5 mass% or more, and is preferably 95 mass% or less, more preferably 80 mass% or less, and particularly preferably 70 mass% or less, with respect to 100 mass% of all the constituent units in the hydrolyzable polymer (A).

When the hydrolyzable polymer (A) contains the constituent unit derived from the (meth)acrylate or an ester thereof (a4), the ratio thereof is preferably 3 mass% or more and more preferably 5 mass% or more, and is preferably 50 mass% or less, more preferably 40 mass% or less, and particularly preferably 30 mass% or less, with respect to 100 mass% of all the constituent units in the hydrolyzable polymer (A).

Note that the ratio of each constituent unit in the hydrolyzable polymer (A) can be measured by nuclear magnetic resonance spectroscopy (NMR), gas chromatography-mass spectrometry (GC-MS), or the like according to an ordinary method, and can also be calculated from the amount of each monomer used in synthesizing the hydrolyzable polymer (A). All the constituent units in the hydrolyzable polymer (A) do not include constituent units derived from a polymerization initiator and a chain transfer agent.

The number average molecular weight (Mn) and the weight average molecular weight (Mw) of the hydrolyzable polymer (A) can be appropriately adjusted so that the degree of the effect of the present invention becomes desired, and in consideration of the viscosity and storage stability of an antifouling coating composition to be obtained, the coating film consumption degree (elution rate, renewability) of an antifouling coating film to be obtained, and the like. The Mn of the hydrolyzable polymer (A) is preferably 500 or more and more preferably 700 or more, and is preferably 100,000 or less and more preferably 50,000 or less. The Mw of the hydrolyzable polymer (A) is preferably 1,000 or more, more preferably 1,200 or more, and particularly preferably 1,500 or more, and is preferably 150,000 or less, more preferably 10,000 or less, and particularly preferably 7,000 or less.

Note that Mn and Mw can be determined by measurement by gel permeation chromatography according to an ordinary method and conversion in terms of standard polystyrene. For more specific measurement methods, conditions, and the like of Mn and Mw, the following Examples can be referred to.

### -Content of component (A)

The content of the hydrolyzable polymer (A) can be appropriately adjusted according to the type and characteristics of the component so that the degree of the effect of the present invention becomes desired, and in consideration of the coating workability of an antifouling coating composition for underwater application to be obtained and other technical matters. The content of the hydrolyzable polymer (A) is, for example, preferably 10 mass% or more and more preferably 15 mass% or more, and is preferably 40 mass% or less and more preferably 35 mass% or less, with respect to 100 mass% of the solid content of the antifouling coating composition for underwater application.

Note that, in the present specification, the "solid content" of the antifouling coating composition for underwater application of the present invention or each component contained therein (for example, a solution containing the component (A), an oxidized polyethylene wax, a fatty acid amide wax, and the like as an anti-sagging agent/anti-settling agent (H)) refers to a component obtained by removing a volatile component contained as a solvent in the antifouling coating composition for underwater application of the present invention or each component. Such a solid content can be calculated as a ratio of the mass of a substance obtained by drying the antifouling coating composition of the present invention or each component in a hot air dryer at 108°C for 3 hours to the mass of the antifouling coating composition for underwater application of the present invention or each component according to an ordinary method. More specifically, according to JIS K 5601-1-2:2008, 1 ± 0.1 g of an object to be measured is weighed on a flat bottom dish, uniformly spread on the bottom surface using a wire having a known mass, dried at 108°C for 3 hours at 1 atm, and the mass of the wire is subtracted from the obtained heating residue to obtain a value of mass percentage.

Note that, when a numerical value as a solid content is shown in a label, a catalog, or the like for a product of each component, the numerical value can be regarded as the solid content of the component. When the blending composition (type and amount of each component and solid content of each component) of the antifouling coating composition of the present invention is known by the above-described measurement method, a numerical value calculated based on the blending composition can be regarded as the solid content of the antifouling coating composition of the present invention.

### <Zinc oxide (B)>

The zinc oxide (B) is zinc oxide having a specific surface area within a specific range, specifically a specific surface area of 5 to 20 m²/g, preferably 7 to 15 m²/g. The specific surface area of the zinc oxide in the present invention is a value measured by a gas adsorption method (BET one-point method). The specific surface area can be measured using "FlowSorb II 2300" manufactured by SHIMADZU CORPORATION described in Table 3 described later.

The zinc oxide (B) having a specific surface area of 5 to 20 m²/g can be obtained as a commercial product such as "Zincox super F-1" (manufactured by HAKUSUI TECH CO., LTD., specific surface area: 10.2 m²/g) or "ABZ-10" (manufactured by SAKAI CHEMICAL INDUSTRY CO., LTD., specific surface area: 9.2 m²/g).

### -Content of component (B)

The content of the zinc oxide (B) can be appropriately adjusted according to the type and characteristics of the component so that the degree of the effect of the present invention becomes desired, and in consideration of the coating workability of an antifouling coating composition for underwater application to be obtained and other technical matters. The content of the zinc oxide (B) is, for example, preferably 5 mass% or more, more preferably 10 mass% or more, and still more preferably 20 mass% or less, and is preferably 70 mass% or less, more preferably 50 mass% or less, and still more preferably 45% or less with respect to 100 mass% of the solid content of the antifouling coating composition for underwater application, and is preferably 50 mass% or more and more preferably 70 mass%, and is preferably 150 mass% or less and more preferably 125 mass% or less, with respect to 100 mass% of the solid content of the hydrolyzable polymer (A).

### <Optional component>

The antifouling coating composition for underwater application of the present invention may further contain components other than the hydrolyzable polymer (A) and the zinc oxide (B) as necessary. Examples of such an optional component include an antifouling agent (C), a pigment (D), a monocarboxylic acid compound (E) and/or a metal ester thereof, a defoaming agent (F), a solvent (G), an anti-sagging agent/anti-settling agent(H), a plasticizer (I), and a binder component (J) (also referred to as components (C) to (J) in the present specification). These optional components are not essential for exhibiting the effects of the present invention, but can be components that are naturally required or usually used for execution (production, use, or the like) as an antifouling coating composition for underwater application, components that can easily exhibit or enhance the effects of the present invention, or components for exhibiting effects other than the present invention. If desired, it is also possible to use other components used in a general antifouling coating composition as components of the antifouling coating composition for underwater application of the present invention.

### <Antifouling agent (C)>

The antifouling coating composition for underwater application of the present invention can exhibit a certain level of excellent antifouling performance without containing an antifouling agent (C), but may contain an antifouling agent (C) as necessary. Examples of the antifouling agent (C) include cuprous oxide, metal pyrithiones (e.g.: copper pyrithione, zinc pyrithione), (+/-)4-[1-(2,3-dimethylphenyl)ethyl]-1H-imidazole (also known as: medetomidine), 4-bromo-2-(4-chlorophenyl)-5-(trifluoromethyl)-1H-pyrrole-3-carbonitrile (also known as: tralopyril), 4,5-dichloro-2-n-octyl-4-isothiazolin-3-one (also known as: DCOIT), pyridine triphenylborane, 4-isopropyl pyridine diphenylmethylborane, N,N-dimethyl-N'-(3,4-dichlorophenyl)urea (also known as: diuron), N-(2,4,6-trichlorophenyl)maleimide, 2,4,5,6-tetrachloroisophthalnitrile, 2-methylthio-4-tert-butylamino-6-cyclopropylamino-1,3,5-triazine (also known as: cybutryne), bisdimethyldithiocarbamoyl zinc ethylene bisdithiocarbamate (also known as: polycarbamate), chloromethyl-n-octyl disulfide, N,N'-dimethyl-N'-phenyl-(N-fluorodichloromethylthio)sulfamide (also known as: dichlofluanide), tetraalkylthiuram disulfide (also known as: TMTD), zinc dimethyl dithiocarbamate (also known as: ziram), zinc ethylene bisdithiocarbamate, 2,3-dichloro-N-(2',6'-diethylphenyl)maleimide, and 2,3-dichloro-N-(2'-ethyl-6'-methylphenyl)maleimide. As the antifouling agent (C), only one kind or two or more kinds may be used. For example, cuprous oxide, metal pyrithione, medetomidine, tralopyril, and DCOIT are preferable as the antifouling agent (C).

When the antifouling coating composition for underwater application of the present invention contains the antifouling agent (C), the content thereof can be appropriately adjusted depending on the purpose (antifouling performance), the type of the component, and the like, and for example, with respect to 100 mass% of the solid content of the composition, the content is preferably 10 to 70 mass% and more preferably 20 to 50% in the case of cuprous oxide, the content is preferably 0.1 to 15 mass% and more preferably 0.5 to 8 mass% in the case of metal pyrithiones, the content is preferably 0.01 to 1 mass% and more preferably 0.03 to 0.5 mass% in the case of medetomidine, the content is preferably 0.5 to 10 mass% and more preferably 3 to 7 mass% in the case of tralopyril, and the content is preferably 0.1 to 8 mass% and more preferably 0.5 to 5 mass% in the case of DCOIT.

### <Pigment (D)>

The antifouling coating composition for underwater application of the present invention can contain a pigment (D) for the purpose of coloring a coating film and hiding a base and/or for the purpose of adjusting the coating film strength to an appropriate level. As the pigment (D), only one kind or two or more kinds may be used.

Note that the "zinc oxide" may be used as a pigment (extender pigment) in a general antifouling coating composition. The "zinc oxide (B) having a specific surface area of 5 to 20 m²/g" used as an essential component in the antifouling coating composition for underwater application of the present invention is not considered to correspond to the pigment (D) as an optional component, but it is not denied that the effect of the present invention on antifouling properties and the effect of coloring a coating film, hiding a base and/or adjusting an appropriate coating film strength as with the pigment (D) are exhibited. In the antifouling coating composition for underwater application of the present invention, zinc oxide not satisfying the condition that the specific surface area is 5 to 20 m²/g (for example, the specific surface area is less than 5 m²/g) may be used as the pigment (D) together with the "zinc oxide (B) having a specific surface area of 5 to 20 m²/g". In such a case, the total amount of the zinc oxide is preferably 20 mass% or more and preferably 80 mass% or less with respect to 100 mass% of the solid content of the antifouling coating composition for underwater application, and is preferably 60 mass% or more and preferably 200 mass% or less with respect to 100 mass% of the solid content of the hydrolyzable polymer (A).

Examples of the pigment (D) include extender pigments such as zinc oxide (excluding zinc oxide having a specific surface area of 5 to 20 m²/g), zinc phosphate, talc, mica, clay, potassium feldspar, calcium carbonate, kaolin, alumina white, white carbon, aluminum hydroxide, magnesium carbonate, barium carbonate, barium sulfate (e.g.: precipitated barium sulfate), calcium sulfate (e.g.: calcined gypsum), and zinc sulfide; and coloring pigments such as Bengala (red iron oxide), titanium white (titanium oxide), yellow iron oxide, carbon black, naphthol red, and phthalocyanine blue.

When the antifouling coating composition for underwater application of the present invention contains the pigment (D), the content thereof can be appropriately adjusted depending on the purpose, the type of the component, and the like, and is, for example, preferably 1 to 40 mass% with respect to 100 mass% of the solid content of the composition.

### <Monocarboxylic acid compound (E)>

The antifouling coating composition for underwater application of the present invention can contain a monocarboxylic acid compound (E) and/or a metal ester thereof for the purpose of improving the renewability of an antifouling coating film to be formed from the surface in water, promoting the improvement of the antifouling properties by promoting the release of the antifouling agent (C) into water when the antifouling coating film contains the antifouling agent (C), and imparting appropriate water resistance to the antifouling coating film. As the monocarboxylic acid compound (E) and/or the metal ester thereof, only one kind or two or more kinds may be used.

Examples of the monocarboxylic acid compound (E) include versatic acid, palmitic acid, stearic acid, isostearic acid, rosin, naphthenic acid, and salicylic acid. As the monocarboxylic acid compound (E), only one kind or two or more kinds may be used. For example, versatic acid and rosin are preferable as the monocarboxylic acid compound (E).

The alkyl carboxylic acid (E) may form a metal ester (e.g.: a copper ester). The metal ester may be formed in advance before the production of the antifouling coating composition for underwater application, or may be formed by a reaction with another coating component during the production of the antifouling coating composition for underwater application.

Note that the versatic acid is a mixture containing an alkyl carboxylic acid having 5 to 15 carbon atoms, mainly 9 to 11 carbon atoms, particularly 10 carbon atoms and having a branched chain. Rosin (rosins such as gum rosin, wood rosin, and tall oil rosin, and rosin derivatives such as hydrogenated rosin and disproportionated rosin) is a mixture of abietic acid having three ring structures containing a conjugated double bond and a carboxy group, and an isomer thereof. Naphthenic acid, salicylic acid, and the like are also compounds having a ring structure and a carboxyl group.

When the antifouling coating composition for underwater application of the present invention contains the monocarboxylic acid compound (E) and/or the metal ester thereof, the content thereof can be appropriately adjusted according to the type and characteristics of the component in consideration of the effect of the present invention and the like. The content of the monocarboxylic acid compound (E) and/or the metal ester thereof is preferably 0.1 mass% or more and more preferably 0.2 mass% or more, and is preferably 10 mass% or less and more preferably 7 mass% or less, with respect to 100 mass% of the solid content of the antifouling coating composition for underwater application.

### <Defoaming agent (F)>

The antifouling coating composition for underwater application of the present invention can contain a defoaming agent (surface modifier, a leveling agent, or the like) (F) for the purpose of, for example, smoothing a coating film to be formed. As the defoaming agent (F), only one kind or two or more kinds may be used.

As the defoaming agent (F), a commercially available defoaming agent such as a silicone-based defoaming agent, a fluorine-based defoaming agent, or a polymer-based defoaming agent can be used without limitation, and examples thereof include "BYK-066N" (manufactured by BYK Chemie Japan K.K., silicone-based defoaming agent), "BYK-350" (manufactured by BYK Chemie Japan K.K., surface modifier, acrylic copolymer), and "BYK-354" (manufactured by BYK Chemie Japan K.K., defoaming agent, acrylic polymer).

When the antifouling coating composition for underwater application of the present invention contains the defoaming agent (F), the content thereof can be appropriately adjusted depending on the purpose, the type of the component, and the like, and is, for example, preferably 0.01 mass% or more and more preferably 0.05 mass% or more, and is preferably 3 mass% or less and more preferably 1 mass% or less, with respect to 100 mass% of the solid content of the composition.

### <Solvent (G)>

The antifouling coating composition for underwater application of the present invention can contain a solvent (G) such as water or an organic solvent for the purpose of, for example, adjusting the viscosity of the composition. Note that the antifouling coating composition of the present invention can be prepared using a liquid containing the hydrolyzable polymer (A) obtained in synthesizing the hydrolyzable polymer (A), but in this case, a solvent contained in the liquid, a solvent, which is separately added when the hydrolyzable polymer (A), the zinc oxide (B), and an optional component as necessary are mixed, or the like corresponds to the solvent (G). As the solvent (G), only one kind or two or more kinds may be used. The solvent (G) is preferably an organic solvent.

Examples of the organic solvent include aromatic organic solvents such as xylene, toluene, and ethylbenzene; ketones such as methyl ethyl ketone, methyl isobutyl ketone, and cyclohexanone; aliphatic (having 1 to 10, preferably about 2 to 5 carbon atoms) monohydric alcohols such as ethanol, isopropyl alcohol, n-butanol, isobutanol, and propylene glycol monomethyl ether; and ester-based solvents such as ethyl acetate and butyl acetate.

When the antifouling coating composition of the present invention contains the solvent (G), the content thereof can be appropriately adjusted depending on the purpose, the type of the component, and the like, and is, for example, preferably 0 to 50 mass% with respect to 100 mass% of the composition.

### <Anti-sagging agent/Anti-settling agent (H)>

The antifouling coating composition for underwater application of the present invention can contain an anti-sagging agent/anti-settling agent (H) for the purpose of, for example, adjusting the viscosity of the composition. As the anti-sagging agent/anti-settling agent (H), only one kind or two or more kinds may be used.

Examples of the anti-sagging agent/anti-settling agent (H) include organic clay waxes (e.g.: stearate salts, lecithin salts, and alkylsulfonate salts of Al, Ca, or Zn), organic waxes (e.g.: polyethylene wax, oxidized polyethylene wax, fatty acid amide wax, and hydrogenated castor oil wax), mixtures of organic clay waxes and organic waxes, and synthetic fine powder silica. As such an anti-sagging agent/anti-settling agent (H), for example, commercially available products such as "DISPARLON 305", "DISPARLON 4200-20", "DISPARLON A630-20X", and "DISPARLON 6900-20X" manufactured by Kusumoto Chemicals, Ltd.; and "AS-A D-120" manufactured by ITOH OIL CHEMICALS CO., LTD. can be used.

When the antifouling coating composition for underwater application of the present invention contains the anti-sagging agent/anti-settling agent (H), the content thereof can be appropriately adjusted depending on the purpose, the type of the component, and the like, and is, for example, preferably 0.01 mass% or more and more preferably 0.1 mass% or more, and is preferably 10 mass% or less and more preferably 3 mass% or less, with respect to 100 mass% of the solid content of the composition.

### <Plasticizer (I)>

The antifouling coating composition for underwater application of the present invention may contain a plasticizer (I) for the purpose of, for example, imparting plasticity to an antifouling coating film to be formed. As the plasticizer (I), one kind or two or more kinds may be used.

Examples of the plasticizer (I) include chlorinated paraffin, n-paraffin, tricresyl phosphate (TCP), dioctyl phthalate (DOP), diisodecyl phthalate (DIDP), and chlorinated paraffin and TCP are preferable.

The chlorinated paraffin may have either a linear or branched molecular structure, and may be in a liquid form or in a solid form (e.g.: a powder form) under conditions at room temperature (e.g.: 23°C).

The average number of carbon atoms in one molecule of the chlorinated paraffin is preferably 8 or more and more preferably 10 or more, and is preferably 30 or less and more preferably 26 or less. When the average number of carbon atoms is less than 8, the effect of suppressing the occurrence of cracks in an antifouling coating film to be formed may be insufficient, whereas when the average number of carbon atoms exceeds 30, the hydrolyzability (coating film consumption degree, renewability, and abrasiveness) of an antifouling coating film to be formed may be excessively reduced, resulting in inferior antifouling properties.

The viscosity (unit: poise, measurement temperature: 25°C) of the chlorinated paraffin is preferably 1 or more and more preferably 1.2 or more. The specific gravity (25°C) thereof is preferably 1.05 g/cm³ or more and more preferably 1.10 g/cm³ or more, and is preferably 1.80 g/cm³ or less and more preferably 1.70 g/cm³ or less.

The chlorination rate (chlorine content) of the chlorinated paraffin is usually 35 to 70 mass% and preferably 35 to 65 mass% when the chlorinated paraffin is taken as 100 mass%.

When the antifouling coating composition for underwater application of the present invention contains the plasticizer (I), the content thereof is preferably 0.1 mass% or more and more preferably 0.5 mass% or more, and is preferably 10 mass% or less and more preferably 5 mass% or less, with 100 mass% of the solid content of the antifouling coating composition for underwater application of the present invention from the viewpoint that the plasticity of the antifouling coating film can be well maintained.

### <Binder component (J)>

The antifouling coating composition for underwater application of the present invention can contain a binder component (J) for the purpose of, for example, imparting water resistance, crack resistance, and strength to an antifouling coating film to be formed. Note that binder component (J) refers to a binder component other than the polymer (A). As the binder component (J), only one kind or two or more kinds may be used.

Examples of the binder component (J) include a polyester-based polymer, a (meth)acrylic (co)polymer, a vinyl-based (co)polymer, a terpene phenol resin, a petroleum resin, and a ketone resin. Among them, a polyester-based polymer, a (meth)acrylic (co)polymer, a vinyl-based (co)polymer, and petroleum resins are preferable, and a polyester-based polymer and petroleum resins are more preferable.

When the antifouling coating composition for underwater application of the present invention contains the binder component (J), the content thereof can be appropriately adjusted depending on the purpose, the type of the component, and the like, and is, for example, preferably 0.1 to 40 mass% with respect to 100 mass% of the solid content of the composition.

### <Method for preparing antifouling coating composition for underwater application>

The antifouling coating composition for underwater application of the present invention can be prepared by the same means (apparatus, method, condition, and the like) as in a general antifouling coating composition using the components (A) and (B), and as necessary, the components (C) to (J) and other optional components. Specifically, it can be prepared by synthesizing the hydrolyzable polymer (A), then adding (the solution of) the obtained hydrolyzable polymer (A), the zinc oxide (B), and as necessary, the components (C) to (J) and other optional components all at once or sequentially to a container, and stirring and mixing them.

### -Antifouling coating film-

An antifouling coating film of the present invention is formed from the antifouling coating composition for underwater application of the present invention. As in the case of forming a conventional antifouling coating film from a conventional antifouling coating composition, the antifouling coating composition of the present invention is formed by drying the antifouling coating composition for underwater application of the present invention. However, the antifouling coating film of the present invention is not limited to the antifouling coating film immediately after being formed from the antifouling coating composition for underwater application of the present invention as described above, and the antifouling coating film of the present invention also includes the antifouling coating film after being deteriorated by use. The antifouling coating film of the present invention contains a substance similar to the antifouling coating composition of the present invention, except that volatile components such as a solvent are lost by drying or the like, and the antifouling coating film after use contains a substance similar to the antifouling coating composition of the present invention, except that some components are lost (released) by exhibiting antifouling performance in addition to the volatile components.

The thickness of the antifouling coating film of the present invention is not particularly limited, and can be set within an appropriate range according to the characteristics (e.g.: coating film consumption rate) and applications (such as type of the substrate and use period) of the antifouling coating film of the present invention, but the thickness is, for example, 30 to 1,000 µm as the thickness in a state immediately after formation.

The antifouling coating film of the present invention preferably has a bright-and-dark abrased film thickness ratio of 1.5 or more as measured by the following method.

### (Bright-and-dark abrased film thickness ratio)

A ratio of a coating film consumption degree in a bright place to a coating film consumption degree (initial film thickness - film thickness after 3 months) in a dark place when a test plate having an antifouling coating film formed is fixed to a surface of a rotary drum, and the surface of the rotary drum is rotated at a speed of 10 kt for 3 months at each of a position (bright place) exposed to transmitted sunlight and a position (dark place) shielded from the sunlight in a water tank placed indoors and filled with sea water replaced at a constant speed.

Note that, in the measurement method described above, the speed of the exchanged water, the sea water temperature, the transmittance of sunlight in a bright place, and the like can be appropriately adjusted assuming an environment in which the antifouling coating film is used. As an example, assuming a case where the antifouling coating film of the present invention uses a ship as a substrate, a vertical portion of the ship bottom is regarded as a bright place, and a flat portion of the ship bottom is regarded as a dark place, and various conditions can be adjusted while considering the environment of a sea area where the ship may navigate.

In another aspect of the present invention, the present invention provides an antifouling coating film containing a hydrolyzable polymer containing a metal ester group and zinc oxide, in which a bright-and-dark abrased film thickness ratio as measured by the following method is 1.5 or more. Such an antifouling coating film in another aspect of the present invention includes an antifouling coating film formed from the above-mentioned antifouling coating composition for underwater application of the present invention, that is, an antifouling coating composition for underwater containing a hydrolyzable polymer (A) containing a metal ester group and zinc oxide (B) having a specific surface area of 5 to 20 m²/g, in which a bright-and-dark abrased film thickness ratio is 1.5 or more, but is not limited thereto, and an antifouling coating film formed from an antifouling coating composition for underwater application containing a hydrolyzable polymer (A) containing a metal ester group and zinc oxide having a specific surface area not satisfying the above conditions or an antifouling coating film formed from an antifouling coating composition for underwater application containing a hydrolyzable polymer (A) containing a metal ester group and zinc oxide having an unknown specific surface area, in which a bright-and-dark abrased film thickness ratio is 1.5 or more, are also further included.

### -Substrate with Antifouling Coating Film-

A substrate with an antifouling coating film of the present invention includes a substrate and the antifouling coating film of the present invention. The antifouling coating film of the present invention is usually formed on a substrate and used as a substrate with an antifouling coating film.

The substrate is not particularly limited as long as it can form the antifouling coating film of the present invention and can exhibit a function, and examples thereof include substrates, all or at least a part of which is submerged, constantly or temporarily, in water, preferably sea water, such as ships (e.g.: outside shells of the hulls of large scale steel-hulled ships including container ships, tankers, bulkers, and the like, fishing boats, FRP boats, wooden boats, and yachts; including both newly built ships and repaired ships), fishery or other marine materials (e.g.: ropes, fishing nets, fishing gears, floats, buoys, diver suits, swimming goggles, oxygen cylinders, swimming suits, and torpedoes), and underwater structures (e.g.: structures such as oil pipelines, water conduit piping, circulating water piping, and supply and discharge ports of thermal/nuclear power plants, submarine cables, seawater utilization equipment (such as sea water pumps), mega-floats, coastal roads, submarine tunnels, port facilities, and structures for various underwater civil engineering in, for example, canals and waterways). In view of the effect of the present invention, a ship (newly built or operated ship) is preferable as a substrate, and a large steel ship such as a container ship, a tanker, or a barker, which has a submerged portion that is exposed to sunlight for a prolonged period of time and is easily damaged by algae and the like, is particularly preferable.

The substrate may be a substrate treated with an antirust agent or another treatment agent, or a substrate having a surface on which a coating film (non-antifouling coating film) other the antifouling coating film, such as an antirust coating film (for example, zinc rich paint), an anticorrosive coating film (for example, epoxy-based heavy anticorrosive paint), or a binder coating film, or the antifouling coating film of the present invention which has been deteriorated, altered, or consumed or an antifouling coating film (old antifouling coating film) formed from another antifouling coating composition is formed. In the substrate with an antifouling coating film of the present invention, the antifouling coating film does not need to be formed in direct contact with the surface of the substrate, and may be formed on the substrate with a treatment agent, another coating film, or the like interposed therebetween. Therefore, the substrate with an antifouling coating film of the present invention may further contain other treatment agents, coating films, and the like in addition to the substrate and the antifouling coating film of the present invention. The antifouling coating film of the present invention can be formed on various non-antifouling coating films, deteriorated antifouling coating films, and the like.

The "non-antifouling coating film" of the substrate refers to a coating film other than an antifouling coating film, such as an undercoat coating film or an intermediate coating film, which is formed on the substrate in advance before the antifouling coating film of the present invention is formed, depending on the type and application of the substrate. The type of the non-antifouling coating film is not particularly limited, and examples thereof include an antirust coating film formed from an antirust paint, an anticorrosive coating film formed from an anticorrosive paint, and a binder coating film formed from a binder paint. Examples of the anticorrosive coating film include those formed from an anticorrosive paint containing an epoxy-based resin. Examples of the binder coating film include those formed from a binder paint containing one or two or more resins such as an epoxy-based resin, a vinyl-based resin, or a (meth)acrylic resin. Note that, when applied to a substrate such as a ship, there is no clear distinction between an anticorrosive coating film (undercoat coating film) and a binder coating film (intermediate coating film), and a coating film that serves as both films may be used; however, the "non-antifouling coating film" may be a binder coating film that also has such an anticorrosive coating film function.

In the substrate, a portion on which the antifouling coating film of the present invention is formed is not particularly limited, and can be appropriately selected according to the application. For example, when the substrate is a ship, a normally submerged portion or a dry-wet alternating portion that is exposed to a biological fouling environment can be a portion (a part of the substrate) on which the antifouling coating film of the present invention is formed. Note that, when the substrate is a ship, the antifouling coating film of the present invention can be formed on the entire portion on which a general antifouling coating film is formed, including not only a ship bottom (normally submerged portion) but also a water line portion (dry-wet alternating portion), and regardless of whether or not the portion is exposed to sunlight.

The "old antifouling coating film" of the substrate refers to an antifouling coating film after being used in contact with water (sea water) for a certain period of time (for example, the service life of the antifouling coating film), which is in a deteriorated, altered, or consumed state as compared with a healthy antifouling coating film before use (before immersion in sea water). The degree of deterioration, alternation, or consumption of the antifouling coating film is not particularly limited, and may be any degree as long as it is recognized that the antifouling coating film of the present invention needs to be formed or is preferably formed. The type of the antifouling coating film is not particularly limited, and may be the antifouling coating film of the present invention or other antifouling coating films. Examples of the antifouling coating film include a hydrolysis type (e.g.: a coating film formed from a silyl ester resin-based antifouling paint) and a hydration type (e.g.: a coating film formed from a vinyl chloride-isobutyl vinyl ether resin-based antifouling paint).

### -Method for producing substrate with antifouling coating film-

A method for producing a substrate with an antifouling coating film of the present invention includes the following steps (1) and (2):
(1) a step of coating or impregnating a substrate with the antifouling coating composition for underwater application of the present invention to obtain a coated body or an impregnated body; and
(2) a step of drying the coated body or the impregnated body.

The application in the step (1) can be performed according to a general method, and for example, a method of applying an antifouling coating composition to a substrate using an airless spray, an air spray, a brush, a roller, or the like can be used. The impregnation in the step (1) can also be performed according to a general method, and for example, a method of immersing a substrate in an antifouling coating composition can be used.

The conditions of application or impregnation can be adjusted so that an antifouling coating film having a desired thickness can be formed, also considering the drying conditions of the step (2). For example, an appropriate amount of the antifouling coating composition per unit area of the substrate can be applied or impregnated so that the thickness of the dry coating film after the step (2) is 10 to 300 µm, preferably 30 to 200 µm.

In the substrate on which the antifouling coating film is formed, when it can be predicted in advance whether a site (bright place) where algae and the like easily propagate or a site (dark place) where algae and the like hardly propagate, the application amount or impregnation amount of the antifouling coating composition in the step (1), that is, the film thickness of the dry coating film after the step (2) can be adjusted depending on the site. For example, when the substrate is a ship bottom of a ship and the antifouling coating composition for underwater application of the present invention having an identical composition is applied thereto to form an antifouling coating film, in the step (1), a relatively large amount of the antifouling coating composition for underwater application is applied to a portion susceptible to sunlight due to water depth, shape, or the like of the ship bottom, and a relatively small amount of the antifouling coating composition for underwater application is applied to a portion not susceptible to sunlight due to water depth, shape, or the like (particularly, a flat bottom) of the ship bottom, so that an incline can be produced in a thick film and a thin film of the antifouling coating film can be formed after the step (2), that is, the dry film thickness of the antifouling coating film. As another definition regarding the portion susceptible to sunlight and the portion not susceptible to sunlight, with reference to the position of the full loaded waterline in the vertical portion of the ship bottom and the position corresponding to the flat bottom portion, the upper half and the lower half may be set as the portion susceptible to sunlight and the portion not susceptible to sunlight, respectively, or a range from the full loaded waterline to a position corresponding to a specific water depth, for example, up to 3 meters or 5 meters below the full loaded waterline may be set as the portion susceptible to sunlight, and a position deeper than the position may be set as the portion not susceptible to sunlight.

The drying in the step (2) may be performed according to a general method at an appropriate temperature or in another environment for an appropriate time. For example, a method of leaving the coated body or the impregnated body obtained in the step (1) at normal temperature (e.g.: 25°C), preferably for 0.5 to 14 days, and more preferably for 1 to 7 days can be mentioned. The drying in this step may be performed under heating or may be performed while blowing air.

The steps (1) and (2) can be repeated as necessary. For example, when an antifouling coating film having a desired thickness cannot be formed by performing the steps (1) and (2) only once, the steps (1) and (2) at the second time can be performed after the steps (1) and (2) at the first time, and the steps (1) and (2) can be further performed as many times as necessary.

In one embodiment of the present invention, the method for producing a substrate with an antifouling coating film of the present invention includes, the step (1), a step of coating or impregnating a substrate having an old antifouling coating film with the antifouling coating composition of the present invention to obtain a coated body or an impregnated body. In the present embodiment, a necessary step, for example, a step of removing dirt on the surface of the old antifouling coating film by water washing or the like and drying the film may be further included before the step (1).

### -Other aspects of present invention-

The antifouling coating composition for underwater application, the antifouling coating film, the substrate with an antifouling coating film, and the method for producing a substrate with an antifouling coating film described in the present specification can be converted into other inventions based on patent practice and common technical knowledge.

For example, the "method for producing a substrate with an antifouling coating film" of the present invention can be converted into an "antifouling method of a substrate" including a step of forming the antifouling coating film of the present invention on at least a part of a substrate. The "step of forming the antifouling coating film" in the "antifouling method of a substrate" is basically the same as the steps (1) and (2) in the "method for producing a substrate with an antifouling coating film". That is, it can be rephrased that the antifouling method of a substrate of the present invention includes: (1') a step of coating or impregnating at least a part of the substrate with the antifouling coating composition for underwater application of the present invention to obtain a coated body or an impregnated body; and (2') a step of drying the coated body or the impregnated body. In addition, the technical matters described in the present specification regarding the "method for producing a substrate with an antifouling coating film" can be appropriately replaced with the technical matters regarding the "antifouling method of a substrate". For example, in accordance with an embodiment in which the substrate has a deteriorated antifouling coating film, the "antifouling method of a substrate" of the present invention can be replaced with a "method for repairing a substrate with a deteriorated antifouling coating film".

### Examples

### (1) Production example for synthesis of metal ester group-containing monomer

### [Production Example M1] Production of metal ester group-containing monomer mixture solution (M-1)

A four-necked flask equipped with a condenser, a thermometer, a dropping funnel, and a stirrer was loaded with 85.4 parts of propylene glycol monomethyl ether (PGM) and 40.7 parts of zinc oxide, and the mixture was heated to 75°C under stirring. Subsequently, a mixture of 43.1 parts of methacrylic acid, 36.1 parts of acrylic acid, and 5 parts of water was added dropwise through the dropping funnel at a constant rate over 3 hours. The mixture was further stirred for 2 hours, and 36 parts of PGM was added thereto, thereby obtaining a transparent metal ester group-containing monomer mixture solution (M-1). The solid content in the solution (M-1) was 44.8 mass%. Note that the solution (M-1) contains zinc diacrylate, zinc dimethacrylate, and zinc acrylate methacrylate corresponding to the compound (1') as a mixture of the metal ester group-containing monomer (a1).

### (2) Production example for synthesis of metal ester group-containing hydrolyzable copolymer

### [Production Example A1] Production of hydrolyzable copolymer solution (A-1)

A four-necked flask equipped with a condenser, a thermometer, a dropping funnel, and a stirrer was loaded with 15 parts of PGM, 61 parts of xylene, and 4 parts of ethyl acrylate (EA), and the mixture was heated to 100 ± 5°C under stirring. While the same temperature was maintained, 37.8 parts of the metal ester group-containing monomer mixture solution (M-1), 18 parts of methyl methacrylate (MMA), 61 parts of ethyl acrylate (EA), 2.5 parts of a polymerization initiator 2,2'-azobisisobutyronitrile (AIBN), 7 parts of a polymerization initiator 2,2'-azobis(2-methylbutyronitrile) (AMBN), 1 part of a chain transfer agent "NOFMER MSD" (product name, manufactured by NOF CORPORATION, α-methylstyrene dimer), and 10 parts of xylene were added dropwise through the dropping funnel at a constant rate over 6 hours. After the completion of the dropwise addition, 0.5 parts of a polymerization initiator tert-butyl peroctoate (TBPO) and 7.0 parts of xylene were added dropwise over 30 minutes, the mixture was further stirred for 1.5 hours, and then 8.2 parts of xylene was added thereto, thereby obtaining a pale yellow transparent hydrolyzable copolymer solution (A-1).

### [Production Example A2] Production of hydrolyzable copolymer solution (A-2)

A four-necked flask equipped with a condenser, a thermometer, a dropping funnel, and a stirrer was loaded with 15 parts of n-butanol, 56 parts of xylene, and 4 parts of ethyl acrylate (EA), and the mixture was heated to 100 ± 5°C under stirring. While the same temperature was maintained, 31.3 parts of the metal ester group-containing monomer mixture solution (M-1), 12.5 parts of n-butyl acrylate (n-BA), 30.2 parts of MMA, 23.2 parts of EA, 6 parts of 2-methoxyethyl acrylate (2-MEA), 10 parts of "X-22-174ASX" (product name, one-terminal methacryloyloxyalkyl-modified organopolysiloxane, manufactured by Shin-Etsu Chemical Co., Ltd.), 0.8 parts of "NOFMER MSD", 1 part of AIBN, 8 parts of AMBN, and 10 parts of xylene were added dropwise through the dropping funnel at a constant rate over 6 hours. After the completion of the dropwise addition, 2 parts of TBPO and 7 parts of xylene were added dropwise over 90 minutes, the mixture was further stirred for 60 minutes, and then 7.5 parts of xylene was added thereto, thereby obtaining a colorless transparent hydrolyzable copolymer solution (A-2).

### [Production Example A3] Production of hydrolyzable copolymer solution (A-3)

A pressure polymerization autoclave equipped with a condenser, a thermometer, a dropping tank, and a stirrer was loaded with 15 parts of PGM, 60 parts of xylene, and 4 parts of EA, the mixture was pressurized to 350 kPa and heated to 135°C under stirring. Subsequently, 15 parts of MMA, 48 parts of EA, 15 parts of n-BA, 40 parts of the metal ester group-containing monomer mixture solution (M-1), 10 parts of xylene, 1.2 parts of "NOFMER MSD", 3 parts of AIBN, and 1 part of AMBN were added dropwise through the dropping tank at a constant rate over 3 hours. After the completion of the dropwise addition, the mixture was cooled to 110°C over 30 minutes, 0.5 parts of TBPO and 5 parts of xylene were added dropwise thereto over 30 minutes, the mixture was further stirred for 1.5 hours, and 8 parts of xylene was added thereto. The obtained mixture was filtered through a 300 mesh filter to obtain a hydrolyzable copolymer solution (A-3) as a pale yellow transparent filtrate without insoluble matter. A trace amount of insoluble matter was observed as a 300-mesh filtration residue.

### <Solid content (Heating residue) of copolymer solution>

The solid contents of the hydrolyzable copolymer solutions (A-1) to (A-3) were calculated as a ratio to the mass of the original solution by measuring the mass of the solution obtained by drying each solution in a hot air dryer at 108°C for 3 hours based on JIS K 5601-1-2:2008.

### <Viscosity of copolymer solution>

The Gardner viscosities of the hydrolyzable copolymer solutions (A-1) to (A-3) were measured at 25°C using a Gardner bubble viscometer.

### <Weight average molecular weight (Mw) of copolymer>

The weight average molecular weights (Mw) of the copolymers contained in the hydrolyzable copolymer solutions (A-1) to (A-3) were measured by gel permeation chromatography (GPC) under the following conditions.

Apparatus: "HLC-8320GPC" (manufactured by Tosoh Corporation)
Column: "TSKgel G4000HXL*G2000HXL" (manufactured by Tosoh Corporation, size: 7.8 mmID × 30 cmL)
Eluent: THF (1 mmol citric acid)
Flow rate: 1.000 ml/min
Detector: RI
Column thermostat chamber temperature: 40°C
Standard substance: polystyrene

Method for preparing samples: THF (tetrahydrofuran) including 1 mmol of citric acid was added to each of the copolymer solutions prepared in the above Production Examples to dilute the copolymers to have a solid concentration of 0.4 wt%, and the solutions were thereafter filtrated through a membrane filter to obtain filtrates as GPC measurement samples.

Information (monomers and characteristics) on the hydrolyzable copolymer solutions (A-1) to (A-3) is shown in Table 1.

**[Table 1]**

| | | | Production Example A1 | Production Example A2 | Production Example A3 |
|---|---|---|---|---|---|
| | | | Solution (A-1) | Solution (A-2) | Solution (A-3) |
| Metal ester group-containing monomer | (a1) | Metal ester group-containing monomer mixture solution (M-1) | 37.8 | 31.3 | 40 |
| Monomer for copolymerization | (a3) | X-22-174ASX | | 10 | |
| | (a4) | Methyl methacrylate (MMA) | 18 | 30.2 | 15 |
| | (a4) | Ethyl acrylate (EA) | 65 | 27.2 | 52 |
| | (a4) | n-Butyl acrylate (n-BA) | | 12.5 | 15 |
| | (a4) | 2-Methoxyethyl acrylate (2-MEA) | | 6 | |
| Polymerization initiator | 2,2'-Azobisisobutyronitrile (AIBN) | | 2.5 | 1 | 3 |
| | 2,2'-Azobis(2-methylbutyronitrile) (AMBN) | | 7 | 8 | 1 |
| | tert-Butyl peroctoate (TBPO) | | 0.5 | 2 | 0.5 |
| Chain transfer agent | NOFMER MSD | | 1 | 0.8 | 1.2 |
| Characteristics | Solid content (mass%) | | 46.0 | 48.4 | 45.7 |
| | Gardner viscosity | | +T | LM | +V |
| | Weight average molecular weight (Mw) | | 5500 | 4300 | 5500 |

### (3) Preparation of antifouling coating compositions of Examples 1 to 7 and Comparative Examples 1 and 2

To a polyethylene container, 7 parts of xylene as a solvent, 3 parts of "Propylene glycol monomethyl ether" (product name, propylene glycol monomethyl ether), 0.5 parts of versatic acid, and 45 parts of the hydrolyzable polymer solution (A-1) were added, and mixed using a paint shaker until each component was uniformly dispersed or dissolved. Thereafter, 25 parts of "zinc oxide 0.12 µm", 2 parts of red iron oxide, 0.5 parts of calcium sulfate, 11 parts of barium sulfate, 4 parts of talc, and 0.5 parts of polyethylene oxide wax were further added to the polyethylene container, and stirred for 1 hour using a paint shaker to disperse these components. After the dispersion, 1.5 parts of fatty acid amide wax was further added, the mixture was stirred for 20 minutes using a paint shaker, and then the mixture was filtered through a filtration net (mesh opening: 80 mesh) to remove a residue, thereby obtaining an antifouling coating composition of Example 1 as a filtrate.

Antifouling coating compositions of Examples 2 to 7 and Comparative Examples 1 and 2 were obtained by the same preparation method as described above except that the blending amount of each component was changed as shown in Table 2. In Examples 3 to 5, a raw material corresponding to the antifouling agent (C) was added at the same stage as the zinc oxide (B) and the like.

Note that the blending amount of each component shown in Table 2 indicates an actual blending amount. For example, in Example 1, the actual blending amount (as a whole) of the fatty acid amide wax is 1.5 parts, and the solid content is 20 mass%, so that the blending amount of the fatty acid amide wax is 0.3 parts.

### (4) Evaluation test

### (4-1) Bright-and-dark abrased film thickness ratio (Ratio of coating film consumption degree in bright place/dark place)

Each of the antifouling coating compositions prepared in Examples and Comparative Examples was applied to a hard vinyl chloride plate of 50 × 50 × 1.5 mm using an applicator so as to have a dry film thickness of about 150 µm, and then dried indoors at room temperature (about 20°C) for 7 days to prepare a test plate with an antifouling coating film (test plate 1) for a consumption degree test.

The test plate 1 was fixed to two side surfaces of the rotary drum after measuring the film thickness of the coating film. In an outdoor water tank filled with sea water replaced at a constant speed, the surface of the rotary drum was rotated at a speed of 10 kt. One side of the water tank was transparent to allow sunlight to pass through (bright place), and the other side was shielded from light (dark place). The film thickness was measured after the lapse of 3 months, and the ratio of the coating film consumption degree in the bright place to the coating film consumption degree in the dark place (film thickness at the start of the test - film thickness after 3 months) was calculated.

### (4-2) Static antifouling performance

An epoxy-based anticorrosive paint ("BANNOH 500" manufactured by CHUGOKU MARINE PAINTS, LTD.) was applied to a sandblasted steel sheet (length 300 mm × width 100 mm × thickness 2.3 mm) so as to have a dry film thickness of 150 µm, and then dried at room temperature for 1 day to form a coating film. An epoxy-based binder paint ("BANNOH 500N" manufactured by CHUGOKU MARINE PAINTS, LTD.) was applied to the surface of the anticorrosive coating film so as to have a dry film thickness of 100 µm, and dried at room temperature for 1 day. Further, each of the antifouling coating compositions prepared in Examples and Comparative Examples was applied onto the coating film to have a dry film thickness of 100 µm, and dried at room temperature for 7 days, thereby preparing a test plate with an antifouling coating film (test plate 2) for a static antifouling property test.

The test plate 2 was installed so that the test plate surface faced the sea surface and was horizontal to the sea surface at 0.3 meters below the sea surface in Hiroshima Bay in winter. After 3 months, the aquatic organism adhesion area on the antifouling coating film of each test plate was measured, and the static antifouling properties of the antifouling coating film was evaluated according to the following evaluation criteria for antifouling performance.

### <Evaluation criteria for antifouling performance/0, 1, and 2 points were acceptable>

0: No adhesion of marine organisms
1: The attachment area of marine organisms is less than 1% of the total
2: The attachment area of marine organisms is 1% or more and less than 10% of the total
3: The attachment area of marine organisms is 10% or more and less than 30% of the total
4: The attachment area of marine organisms is 30% or more and less than 70% of the total
5: The attachment area of marine organisms is 70% or more of the total

### (4-3) Dynamic Antifouling Performance

A sandblasted steel sheet (length 170 mm × width 70 mm × thickness 2.3 mm) which was bent so as to be attachable to a side surface of a rotary drum installed in a test raft moored in Kure Bay, Hiroshima Prefecture was prepared. An epoxy-based anticorrosive paint ("BANNOH 500" manufactured by CHUGOKU MARINE PAINTS, LTD.) was applied to the sandblasted steel sheet so as to have a dry film thickness of 150 µm, and then dried at room temperature for 1 day to form a coating film. An epoxy-based binder paint ("BANNOH 500N" manufactured by CHUGOKU MARINE PAINTS, LTD.) was applied to the surface of the anticorrosive coating film so as to have a dry film thickness of 100 µm, and dried at room temperature for 1 day. Further, each of the antifouling coating compositions prepared in Examples and Comparative Examples was applied onto the coating film to have a dry film thickness of 100 µm, and dried at room temperature for 7 days, thereby preparing a test plate with an antifouling coating film (test plate 3) for a dynamic antifouling property test.

The test plate 3 was attached to a rotary drum installed 1 meter below the sea surface in Hiroshima Bay in winter, and rotated at a speed corresponding to 15 kt. After 6 months, the aquatic organism adhesion area on the antifouling coating film of each test plate was measured, and the dynamic antifouling properties of the antifouling coating film was evaluated according to the following evaluation criteria for antifouling performance.

### <Evaluation criteria for antifouling performance/0, 1, and 2 points were acceptable>

0: No adhesion of marine organisms
1: The attachment area of marine organisms is less than 1% of the total
2: The attachment area of marine organisms is 1% or more and less than 10% of the total
3: The attachment area of marine organisms is 10% or more and less than 30% of the total
4: The attachment area of marine organisms is 30% or more and less than 70% of the total
5: The attachment area of marine organisms is 70% or more of the total

Information (composition and evaluation test results) on the antifouling coating compositions of Examples 1 to 7 and Comparative Examples 1 and 2 is shown in Table 2. The details of the components (products) described in Table 2 used for the preparation of these antifouling coating compositions are shown in Table 3.

**[Table 2]**

| | | | Example | | | | | | | Comparative Example | |
|---|---|---|---|---|---|---|---|---|---|---|---|
| | | | 1 | 2 | 3 | 4 | 5 | 6 | 7 | 1 | 2 |
| | (A) | A-1 | 45.0 | 45.0 | | 45.0 | | | | 45.0 | 45.0 |
| | | A-2 | | | 42.0 | | 42.0 | 39.0 | | | |
| | | A-3 | | | | | | | 45.0 | | |
| | (B) | Zinc oxide (B1) | 25.0 | | 25.0 | 15.0 | 22.0 | 15.0 | 25.0 | | |
| | | Zinc oxide (B2) | | 25.0 | | | | | | | |
| | (B') | Zinc oxide (B3) | | | | | | | | 25.0 | |
| | (C) | Cuprous oxide | | | | | | 30.0 | | | |
| | | Copper pyrithione | | | | | 0.9 | 0.9 | | | |
| | | Zinc pyrithione | | | | | 0.9 | | 5.0 | | |
| | | Medetomidine | | | | | 0.1 | 0.1 | | | |
| | | DCOIT | | | | | 3.0 | | | | |
| | | Tralopyril | | | | | 0.9 | | 3.0 | | |
| Formulation (parts by mass) | (D) | Red iron oxide | 2.0 | 2.0 | 2.0 | 2.0 | 2.0 | 2.0 | 2.0 | 2.0 | 2.0 |
| | | Calcium sulfate | 0.5 | 0.5 | 0.5 | 0.5 | 0.5 | 0.5 | 0.5 | 0.5 | 0.5 |
| | | Barium sulfate | 11.0 | 11.0 | 11.0 | 21.0 | 11.0 | | 7.0 | 11.0 | 11.0 |
| | | Talc | 4.0 | 4.0 | 4.0 | 4.0 | 4.0 | 2.0 | 4.0 | 4.0 | 4.0 |
| | | Titanium oxide | | | | | | | | | 25.0 |
| | (E) | Versatic acid | 0.5 | 0.5 | 0.5 | 0.5 | 0.5 | | 0.5 | 0.5 | 0.5 |
| | | Rosin | | | | | | 1.5 | | | |
| | (F) | BYK-066N | | | 0.1 | | 0.1 | 0.1 | | | |
| | (G) | Xylene | 7.0 | 7.0 | 9.9 | 7.0 | 7.1 | 6.9 | 6.0 | 10.0 | 10.0 |
| | | PGM | 3.0 | 3.0 | 3.0 | 3.0 | 3.0 | | | | |
| | (H) | Fatty acid amide wax | 1.5 | 1.5 | 1.5 | 1.5 | 1.5 | 1.5 | 1.5 | 1.5 | 1.5 |
| | | Oxidized polyethylene wax | 0.5 | 0.5 | 0.5 | 0.5 | 0.5 | 0.5 | 0.5 | 0.5 | 0.5 |
| | Total (parts by mass) | | 100.0 | 100.0 | 100.0 | 100.0 | 100.0 | 100.0 | 100.0 | 100.0 | 100.0 |
| (B)/(A)(%) | | | 123 | 123 | 121 | 74 | 107 | 78 | 101 | 123 | 0 |
| Coating material solid content (mass%) | | | 60 | 60 | 60 | 60 | 61 | 68 | 68 | 60 | 60 |
| Result | Bright/dark abrased film thickness ratio | | 2.2 | 2.5 | 2.6 | 1.5 | 1.9 | 1.5 | 2.9 | 1.1 | 1.0 |
| | Static antifouling properties | | 5 | 5 | 5 | 4 | 5 | 5 | 5 | 2 | 1 |
| | Dynamic antifouling properties | | 4 | 4 | 5 | 4 | 5 | 4 | 4 | 2 | 1 |

**[Table 3]**

| Component | | Details |
|---|---|---|
| (B) Zinc oxide having specific surface area satisfying predetermined condition | Zinc oxide (B1) | Specific surface area of 10.2 m²/g, "Zincox super F-1" manufactured by HAKUSUI TECH CO., LTD. |
| | Zinc oxide (B2) | Specific surface area of 9.2 m²/g, "ABZ-10" manufactured by SAKAI CHEMICAL INDUSTRY CO., LTD. |
| (B') | Zinc oxide (B3) | Specific surface area of 3.0 m²/g |
| (C) Antifouling agent | Cuprous oxide | "Red Copp 97N Premium" manufactured by American Chemet Corporation |
| | Copper pyrithione | "Copper Omadine Powder" manufactured by Arch UK Biocides Ltd., chemical formula: Cu(-S-C₅H₄NO-)₂ |
| | Zinc pyrithione | "Zinc Omadine Powder" manufactured by Arch UK Biocides Ltd., chemical formula: Zn(-S-C₅H₄NO-)₂ |
| | Medetomidine | "Selektope" manufactured by I-tech AB, chemical formula: (±)-4-[1-(2,3-dimethylphenyl)ethyl]-1H-imidazole |
| | DCOIT | "SEA NINE 211N" manufactured by Rohm and Haas Japan K.K., 4,5-dichloro-2-n-octyl-4-isothiazolin-3-one, solid content 30 mass% xylene solution |
| | Tralopyril | "Econea technical" manufactured by Janssen PMP, chemical formula: 4-bromo-2-(4-chlorophenyl)-5-(trifluoromethyl)-1H-pyrrole-3-carbonitrile |
| (D) Pigment | Red iron oxide | "Bengala No. 404" manufactured by Morishita Bengala Kogyo Co., Ltd. |
| | Calcium sulfate | "AS gypsum" manufactured by San Esu Gypsum Co., Ltd. |
| | Barium sulfate | "Precipitated Barium 100" manufactured by SAKAI CHEMICAL INDUSTRY CO., LTD. |
| | Talc | "TTK Talc" manufactured by Takehara Chemical Industrial Co., Ltd. |
| | Titanium oxide | "TITONE A-110" (anatase-type titanium oxide) manufactured by SAKAI CHEMICAL INDUSTRY CO., LTD. |
| (E) Monocarboxylic acid compound | Versatic acid | "Versatic 10" manufactured by Japan Epoxy Resins Co., Ltd., neodecanoic acid |
| | Rosin | WW Rosin (made in China) |
| (F) Defoaming agent | BYK-066N | "BYK-066N" manufactured by BYK Chemie Japan K.K., silicone-based defoaming agent, (solid content: 0.7 mass%) |
| (G) Solvent | Xylene | - |
| | PGM | Propylene glycol monomethyl ether |
| (H) Anti-sagging agent/antisettling agent | Fatty acid amide wax | "DISPARLON 6900-20X" manufactured by Kusumoto Chemicals, Ltd. (solid content: 20 mass%) |
| | Oxidized polyethylene wax | "A-S-A D-120" manufactured by ITOH OIL CHEMICALS CO., LTD. (solid content: 20 mass%) |

By comparing the results of the evaluation tests of Examples and Comparative Examples described in Table 2, for example, the following can be said. (1) As compared with the antifouling coating composition not containing zinc oxide (Comparative Example 2), in the antifouling coating composition to which zinc oxide having a specific surface area not satisfying a predetermined condition is added (Comparative Example 1), an increase in the bright-and-dark abrased film thickness ratio is small, and both the static antifouling properties and the dynamic antifouling properties are not sufficiently improved. On the other hand, in the antifouling coating composition to which zinc oxide having a specific surface area satisfying a predetermined condition was added (Examples 1 and 2), the bright-and-dark abrased film thickness ratio greatly increased, and both the static antifouling properties and the dynamic antifouling properties were dramatically improved. Even when the hydrolyzable copolymer is changed (Example 3), when the content of the extender pigment (barium sulfate) is increased (Example 4), and when the antifouling agent (C) is added (Examples 5 to 7), the bright-and-dark abrased film thickness ratio is large, and both static antifouling properties and the dynamic antifouling properties can be excellent.

## Claims

1. An antifouling coating composition for underwater application, comprising: a hydrolyzable polymer (A) containing a metal ester group; and zinc oxide (B) having a specific surface area of 5 to 20 m²/g.

2. The antifouling coating composition for underwater application according to claim 1, wherein a content of the zinc oxide (B) is 50 to 150 mass% with respect to 100 mass% of a solid content of the hydrolyzable polymer (A).

3. The antifouling coating composition for underwater application according to claim 1 or 2, further comprising an antifouling agent (C).

4. The antifouling coating composition for underwater application according to claim 1 or 2, further comprising a monocarboxylic acid compound (E) and/or a metal ester thereof.

5. An antifouling coating film formed from the antifouling coating composition for underwater application according to claim 1 or 2.

6. A substrate with an antifouling coating film, comprising: a substrate; and the antifouling coating film according to claim 5.

7. A method for producing a substrate with an antifouling coating film, the method comprising: a step (1) of coating or impregnating a substrate with the antifouling coating composition for underwater application according to claim 1 or 2 to obtain a coated body or an impregnated body; and a step (2) of drying the coated body or the impregnated body.

8. The method for producing a substrate with an antifouling coating film according to claim 7, wherein the substrate is a ship bottom of a ship, and in the step (1), a large amount of the antifouling coating composition for underwater application having an identical composition is applied to a portion susceptible to sunlight, and a small amount of the antifouling coating composition for underwater application is applied to a portion not susceptible to sunlight to produce an incline in a film thickness of an antifouling coating film formed after the step (2).

9. An antifouling coating film comprising: a hydrolyzable polymer containing a metal ester group; and zinc oxide, wherein a bright-and-dark abrased film thickness ratio as measured by the following method is 1.5 or more,
the bright-and-dark abrased film thickness ratio being a ratio of a coating film consumption degree (initial film thickness - film thickness after 3 months) in a bright place to a coating film consumption degree in a dark place when a test plate having an antifouling coating film formed is fixed to a surface of a rotary drum, and the surface of the rotary drum is rotated at a speed of 10 kt for 3 months at each of a position (bright place) exposed to transmitted sunlight and a position (dark place) shielded from the sunlight in a water tank placed indoors and filled with sea water replaced at a constant speed.

10. A substrate with an antifouling coating film, comprising: a substrate; and the antifouling coating film according to claim 9.
